# EUROPEAN PATENT APPLICATION

(11) **EP 4 741 319 A1**
(43) Date of publication of application: **13.05.2026**
(21) Application number: 25214544.6
(22) Date of filing: 10.11.2025
(51) Int. Cl.: B65G 21/20, B65B 43/42, B65G 47/26, B31B 50/00

(54) **SIDE-BY-SIDE PLACING DEVICE FOR BOXES AND PACKAGING MACHINE COMPRISING SUCH DEVICE**

(30) Priority: 12.11.2024 IT 202400025455
(71) Applicant: OCME S.r.l., 43122 Parma (PR) (IT)
(72) Inventor: CORRADO, Antonio, 43122 Parma (PR) (IT)
(74) Representative: Stampa, Francesco

(57) **Abstract**

Side-by-side placing device (1) configured to place a plurality of boxes side by side, wherein each box comprises a housing portion and a cover portion connected to the housing portion and comprising a first side flap and a second side flap which protrude from opposite sides along an advancement direction (D) with respect to the housing portion, the device (1) comprising:

- support means defining a first alignment position (20) and at least a first further alignment position (21) downstream of the first alignment position (20), wherein the boxes can be positioned substantially aligned with each other along the advancement direction (D) ;

- sorting means (3) comprising at least a first fin (31) arranged so that it can be interposed between the first side flap of the box positioned in the first alignment position (20) and the second side flap of the box positioned in the first further alignment position (21), the first fin (31) being rotatable on itself around a first axis of rotation substantially perpendicular to the advancement direction (D); and

- movement means (27) that can be operated to advance the box positioned in the first alignment position (20) along the advancement direction (D) towards the box positioned in the first further alignment position (21).

## Description

The present invention relates to a side-by-side placing device for placing a plurality of boxes side by side, and in particular to such a device adapted to be part of a packaging machine.

In the packaging sector, automatic packaging machines capable of packing specific products in specific quantities inside cardboard boxes have been known for some time.

Such machines generally comprise a forming area in which each box is formed, for example, from a cardboard die-cut, a filling area in which each box is filled with the products to be packed, and a closing area in which each box is closed after being filled, and advancement means operable to advance the boxes in order from one area to the next.

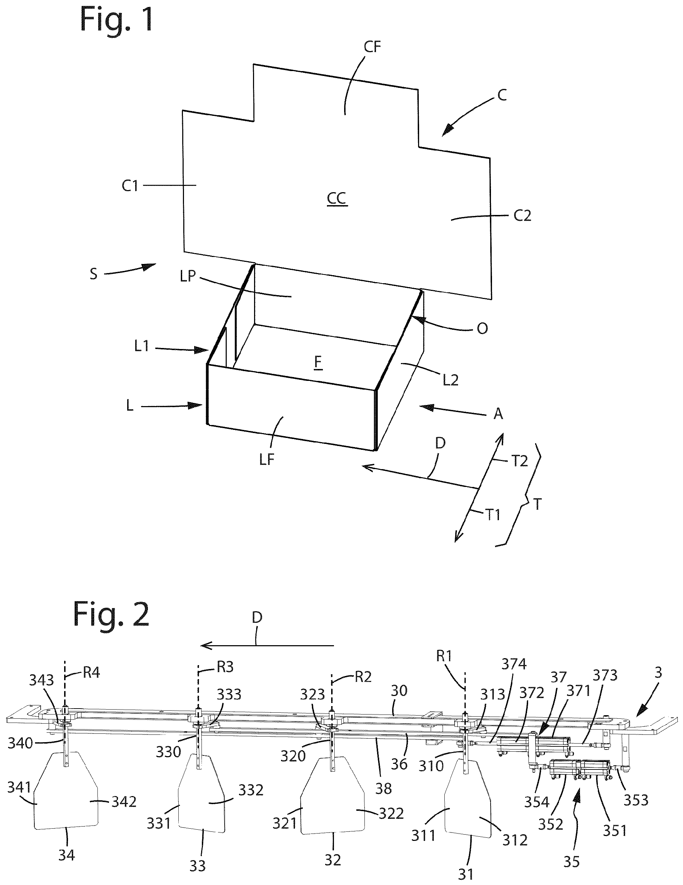

A type of box particularly often used in such machines is the one depicted in Figure 1. Such box S comprises a housing portion A defining a compartment suitable for housing the products and accessible through an opening O, and a cover portion C adapted to selectively close the opening O.

More specifically, the housing portion A comprises a substantially rectangular bottom wall F and a lateral surface L having a first lateral wall L1 and a second lateral wall L2 opposite to each other along an advancement direction D, and a front wall LF and a rear wall LP opposite to each other perpendicularly to the advancement direction D. The lateral surface L ends at the top with a rectangular edge that delimits the opening O.

The cover portion C, on the other hand, comprises a rectangular-shaped central flap CC connected to the edge of the rear wall LP of the housing portion A, so that the cover portion C can rotate with respect to the housing portion A around an axis parallel to the advancement direction D between an open configuration, in which it allows access to the compartment through the opening O, and a closed configuration, in which the central flap CC closes the opening O, preventing access to the compartment.

The cover portion C further comprises a first side flap C1 and a second side flap C2 connected to the central flap CC so as to protrude from the housing portion A along the advancement direction D on opposite sides, specifically so as to protrude with respect to the first lateral wall L1 and the second lateral wall L2, respectively. The cover portion C can further comprise a front flap CF connected to the central flap CC so as to protrude from the housing portion A (specifically with respect to the front wall LF) when the cover portion C is in the closed configuration, perpendicularly to the advancement direction D.

In the packaging machine, each box S as previously described is initially formed in the forming area in its open configuration, and is then advanced into the filling area by the advancement means.

In order to facilitate the operations of filling and subsequently closing the boxes S, it is desirable that the boxes S are advanced into the filling area, and subsequently also into the closing area, substantially aligned with each other and uniformly oriented, i.e., so that the advancement direction D of each box S is the same, thereby defining a collective advancement direction D, and the front walls LF and the rear walls LP of the boxes S are all respectively aligned with each other along the advancement direction D.

However, by arranging the boxes S aligned and uniformly oriented, they must necessarily be arranged so that their respective housing portions A are spaced apart from each other along the advancement direction D. Indeed, since the side flaps C1 and C2 protrude along the advancement direction D with respect to the housing portions A, placing the housing portions A side by side along the advancement direction D would result in a collision between the first side flap C1 of each box S and the second side flap C2 of the box S arranged immediately downstream; such a collision could cause undesirable and unpredictable displacement of the boxes S, thereby compromising their subsequent filling and closing, and possibly causing malfunctions or jams in the machine. Accordingly, currently, the packaging machine must necessarily comprise advancement means capable of moving the boxes S along the advancement direction D while keeping them spaced apart from each other, and filling systems capable of filling each box S individually. Such solution is particularly costly and inevitably limits the productivity of the machine.

An object of the present invention is to overcome the above-mentioned drawbacks, and in particular to enable a packaging machine to pack products into boxes S with high productivity and low cost, meanwhile reducing the likelihood of malfunctions or jams.

A further object of the present invention is to enable a packaging machine to occupy a limited space and to easily pack products into boxes S of different sizes. These and other results are achieved, according to the present invention, by making a device according to claim 1, and a packaging machine according to claim 9. Further features of the invention are the subject of the dependent claims.

The present invention will now be described, by way of illustration but not limitation, according to its preferred embodiments, with reference to the figures of the attached drawings, in which:
- Figure 1 is a three-dimensional perspective view of a box that can be placed side-by-side by a device according to the invention;
- Figure 2 is a three-dimensional perspective view of the sorting means of a device according to a first embodiment of the invention;
- Figure 3 is a three-dimensional perspective view of Figure 2 from a different observation point, with the fins arranged in the first rest configuration;
- Figure 4 is a three-dimensional perspective view of Figure 2 from a different observation point, with the fins arranged in the operating configuration;
- Figure 5 is a three-dimensional perspective view of Figure 2 from a different observation point, with the fins arranged in the second rest configuration;
- Figures 6 to 12 are three-dimensional perspective views of a device according to the first embodiment of the invention, in successive steps of the related operation;
- Figures 13 to 18 are three-dimensional perspective views of a device according to a second embodiment of the invention, in successive steps of the related operation.

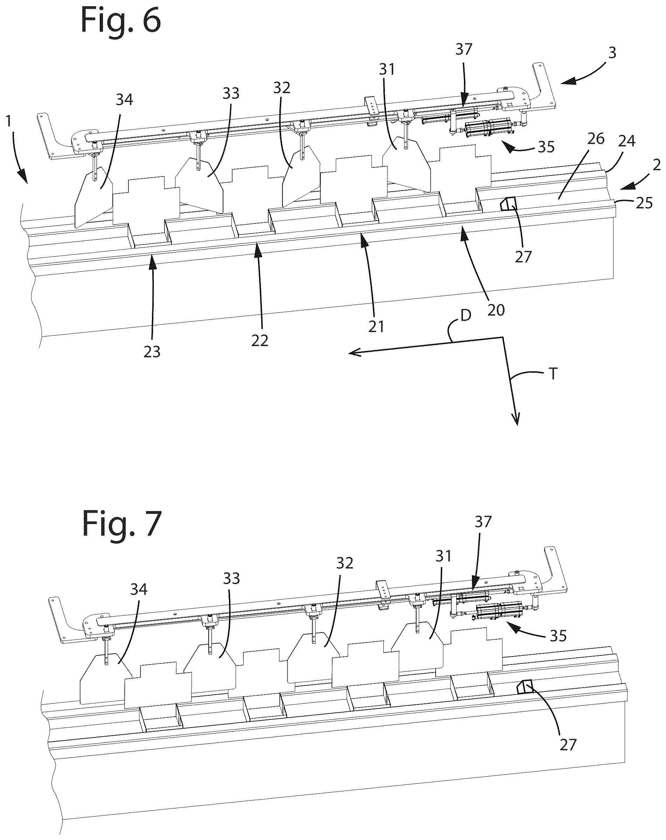

With reference to Figure 6, number 1 globally indicates a side-by-side placing device according to a first embodiment of the invention.

The device 1 comprises, first of all, support means 2 configured to support the boxes S in respective alignment positions so that the boxes S form a group and are substantially aligned along the advancement direction D, i.e. with the respective housing portions A aligned with each other along the advancement direction D and the respective cover portions C extending from the housing portions A perpendicularly to the advancement direction D and aligned with each other along the advancement direction D. Preferably, when the boxes S are positioned in the alignment positions, the cover portions C extend from their respective housing portions A perpendicularly to the respective bottoms F, i.e., substantially vertically.

More specifically, the support means 2 define a first alignment position 20 (in which a first box S can be positioned) and at least a first further alignment position 21 (in which a second box S can be positioned), defined downstream of the first alignment position 20 along the advancement direction D. In such case, the device 1 is capable of placing groups of two boxes side by side.

Furthermore, the support means 2 can also define further alignment positions downstream of the first further alignment position 21, in order to allow the device 1 to place groups comprising an arbitrary number of boxes S side by side. For example, in the embodiment illustrated in Figures 2 to 12, the support means 2 also define a second further alignment position 22 (in which a third box S can be positioned) and a third further alignment position 23 (in which a fourth box S can be positioned) downstream of the first further alignment position 21: therefore, in this case, the device 1 can place groups of four boxes side by side.

Preferably, the alignment positions 20, 21, 22, 23 are defined on a support plane 26 between a first guide 24 and a second guide 25 which extend along the advancement direction D. The first guide 24 and the second guide 25 are spaced from each other in a direction perpendicular to the advancement direction D by a distance that slightly exceeds the width of the housing portion A of the boxes S measured perpendicularly to the advancement direction D, so that the boxes S can be guided along the advancement direction D without transverse displacement within the channel defined on the support plane 26 between the first guide 24 and the second guide 25.

The device 1 further comprises movement means 27, that can be operated to advance the first box S toward the second box S along the advancement direction D until the respective housing portions A come into contact, placing them side by side. More specifically, the movement means 27 are operable to bring the first lateral wall L1 of the first box S into contact with the second lateral wall L2 of the second box S.

Furthermore, in the embodiment illustrated in Figures 2 to 12, the movement means 27 are also configured to subsequently advance the first box S and the second box S (already placed side by side) toward the third box S, thus placing the three boxes S side by side, and then to advance the first box, second box, and third box S (already placed side by side) toward the fourth box S, thereby placing all four boxes S side by side.

Preferably, the movement means 27 comprise at least one pusher element 27 operable to come into contact with the second lateral wall L2 of the first box S and to move along the advancement direction D, so as to push the first box S along the advancement direction D toward the other boxes S, thereby placing all the boxes S serially side by side and advancing them along the advancement direction D.

Alternately, the movement means 27 can provide different solutions for moving the first box S along the advancement direction D toward the other boxes S and thus serially placing all the boxes S side by side. For example, the movement means 27 can comprise one or more suction cups, or one or more electro-adhesive elements, operable to grasp the first box S and to move along the advancement direction D.

The device 1 further comprises sorting means 3 operable to sort the side flaps C1, C2 of the boxes S supported in the alignment positions 20, 21, 22, 23.

With reference to Figure 2, the sorting means 3 comprise at least a first fin 31 arranged between the first alignment position 20 and the first further alignment position 21, arranged so that it can be interposed between the first side flap C1 of the first box S and the second side flap C2 of the second box S, i.e., so that the second side flap C2 of the second box S and the first side flap C1 of the first box S are on opposite sides of the first fin 31. The first fin 31 comprises a first front portion 311 and a first rear portion 312, and is rotatable on itself around a first axis of rotation R1 that is substantially perpendicular to the advancement direction D and separates the first front portion 311 from the first rear portion 312. Preferably, the first axis of rotation R1 is substantially parallel to the direction along which the cover portions C of the boxes S extend with respect to the corresponding housing portions A.

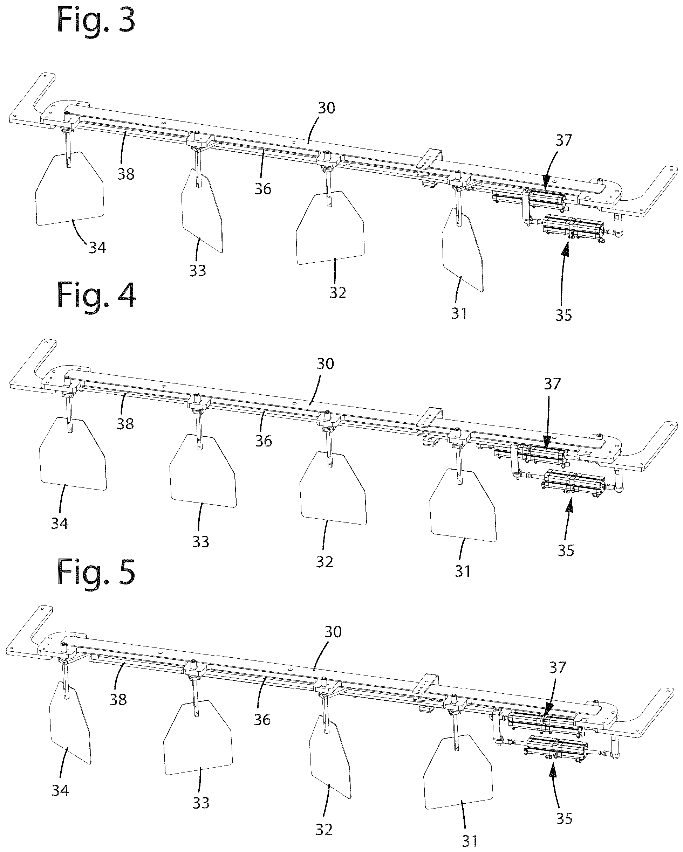

In particular, the first fin 31 is rotatable on itself around the first axis of rotation R1 in a first direction, between a first rest configuration (Figures 2, 3, and 6) and an operating configuration (Figures 4 and 7). In the first rest configuration, the first fin 31 forms a non-zero angle with respect to the advancement direction D so that the first front portion 311 is arranged "behind" (when observing the device 1 from the front, i.e., from the side of the front wall LF of the boxes S) the second side flap C2 of the second box S, and the first rear portion 312 is arranged "in front of" the first side flap C1 of the first box S; in the operating configuration, the first fin 31 is instead arranged substantially parallel to the advancement direction D, while still keeping the first front portion 311 "behind" the second side flap C2 of the second box S and the first rear portion 312 "in front of" the first side flap C1 of the first box S. The size of the first front portion 311 and the first rear portion 312 are such that the rotation of the first fin 31 in the first direction brings the first front portion 311 into contact with the second side flap C2 of the second box S (positioned in the first further alignment position 21) and the first rear portion 312 into contact with the first side flap C1 of the first box S (positioned in the first alignment position 20). In this way, the rotation of the first fin 31 in the first direction causes a displacement of the second side flap C2 of the second box S with the first front portion 311 in a first orientation T1 of a displacement direction T (depicted in Figure 1) that is substantially perpendicular to both the advancement direction D and the first axis of rotation R1, and a displacement of the first side flap C1 of the first box S with the first rear portion 312 in a second orientation T2, opposite to the first orientation T1, of the displacement direction T.

Furthermore, the sorting means 3 can also comprise other fins arranged downstream of the first fin 31 so that a fin can be interposed between the second side flap C2 and the first side flap C1 of each pair of boxes S positioned in consecutive further alignment positions 21, 22, 23, such other fins being rotatable on themselves around respective axes of rotation substantially parallel to the first axis of rotation R1. For example, in the embodiment illustrated in Figures 2 to 12, the sorting means 3 also comprise a second fin 32, rotatable around a second axis of rotation R2 and interposable between the second side flap C2 of the third box S and the first side flap C1 of the second box S, and a third fin 33, rotatable around a third axis of rotation R3 and interposable between the second side flap C2 of the fourth box S and the first side flap C1 of the third box S.

Furthermore, the sorting means 3 can also comprise an end fin 34 arranged downstream of the most downstream alignment position, and rotatable on itself around an end axis of rotation R4 that is substantially parallel to the first axis of rotation R1. For example, in the embodiment illustrated in Figures 2 to 12, the end fin 34 is arranged downstream of the third fin 33. As described in greater detail below, the end fin 34 allows to place multiple groups of boxes S side by side.

All the fins 31, 32, 33, 34 are rotatable around their respective axes of rotation R1, R2, R3, R4 between a first rest configuration (Figures 2, 3, and 6) and an operating configuration (Figures 4 and 7), rotating alternately in opposite directions: when moving from the first rest configuration to the operating configuration, the first fin 31 rotates in a first direction, the second fin 32 in a second direction opposite to the first direction, the third fin 33 in the first direction like the first fin 31, and so on.

In the first rest configuration, the fins 31, 32, 33, 34 form non-zero angles with the advancement direction D that are substantially equal and open alternately on opposite sides of the advancement direction D: in this way, a second front portion 321 of the second fin 32 is arranged "in front of" the second side flap C2 of the third box S, and a second rear portion 322 is arranged "behind" the first side flap C1 of the second box S (i.e., in a way opposite to the arrangement of the first fin 31), whereas the third fin 33 (with a third front portion 331 and a third rear portion 332) is arranged with respect to the fourth box and third box S substantially as the first fin 31 is arranged with respect to the second box and first box S. The end fin 34 (with a front end portion 341 and a rear end portion 342) is arranged in the first rest configuration in a way substantially opposite to the immediately upstream fin: for example, in the embodiment shown in Figures 2 to 12, the end fin 34 is arranged substantially like the second fin 32.

In the operating configuration, on the other hand, the fins 31, 32, 33, 34 are arranged substantially parallel to the advancement direction D.

By rotating the fins 31, 32, 33, 34 as described, from the first rest configuration to the operating configuration, and then operating the movement means 27, it is possible to place the boxes S side by side along the advancement direction D so as to bring the respective housing portions A into contact one after the other, while avoiding a collision between the first side flap C1 of each box S and the second side flap C2 of the immediately downstream box S, since such side flaps C1, C2 are shifted and kept offset by the fins 31, 32, 33, 34 in the operating configuration. This allows to place the boxes S side by side while avoiding malfunctions and jams of the machine, to employ simple and inexpensive movement means 27 for advancing the boxes toward the filling area, and to employ filling systems capable of filling multiple boxes S placed side by side, which are more economical and allow for greater productivity, for subsequently filling the boxes S.

Preferably, all the fins 31, 32, 33, 34 are rotatable around the respective axes of rotation R1, R2, R3, R4 also between a second rest configuration (Figure 5), which is substantially symmetrical to the first rest configuration with respect to the operating configuration, and the operating configuration, each fin 31, 32, 33, 34 rotating in the direction opposite with respect to the rotation from the first rest configuration to the operating configuration. In this way, it is possible to offset the side flaps C1, C2 of the boxes S also in the opposite direction to that achieved by rotating the fins 31, 32, 33, 34 from the first rest configuration to the operating configuration. Preferably, the fins 31, 32, 33, 34 are supported between the corresponding alignment positions 20, 21, 22, 23 by a frame 30 fixed with respect to the support means 2. More specifically, the fins 31, 32, 33, 34 are fixed to respective pins 310, 320, 330, 340 which are supported by the frame 30 by sliding bushings, so that they can rotate with respect to the frame 30 around the respective axes of rotation R1, R2, R3, R4.

Preferably, the sorting means 3 further comprise a first fluid-dynamic actuator 35 operable to assume three different stable positions: a first retracted position, a first intermediate position, and a first advanced position. To this end, the first actuator 35 comprises a first double-acting cylinder 351 and a second double-acting cylinder 352, integral with each other and placed side by side so that the respective pistons 353, 354 can come out from the respective cylinders 351, 352, moving in opposite ways along the advancement direction D.

In such case, the sorting means 3 further comprise a first rod 36 extending along the advancement direction D and fixed to the free end of the second piston 354 so as to be able to move with respect to the frame 30, when the first actuator 35 is operated, along the advancement direction D between a first retracted position, a first intermediate position, and a first advanced position. The free end of the first piston 353 is instead fixed to the frame 30.

In the embodiment illustrated in Figures 2 to 12, the first fin 31 and the third fin 33 are kinematically connected to the first rod 36, preferably by the first pin 310 and the third pin 330, respectively, so that when the first rod 36 is in the first retracted position, the first fin 31 and the third fin 33 are in the first rest configuration (Figures 2 and 3); when the first rod 36 is in the first intermediate position, the first fin 31 and the third fin 33 are in the operating configuration (Figure 4), and when the first rod 36 is in the first advanced position, the first fin 31 and the third fin 33 are in the second rest configuration (Figure 5). More specifically, the first pin 310 and the third pin 330 are connected to the first rod 36 respectively by a first arm 313 and a third arm 333, both transverse, respectively fixed to the first pin 310 and third pin and connected to the first rod 36 so as to rotate with respect to it around axes parallel to the first axis of rotation R1.

Furthermore, the sorting means 3 preferably also comprise a second fluid-dynamic actuator 37 operable to assume three different stable positions: a second retracted position, a second intermediate position, and a second advanced position. To this end, the second actuator 37 also comprises a third double-acting cylinder 371 and a fourth double-acting cylinder 372, integral with each other and placed side by side so that the respective pistons 373, 374 can come out from the respective cylinders 371, 372, moving in opposite ways along the advancement direction D.

In such case, the sorting means 3 further comprise a second rod 38 extending along the advancement direction D and fixed to the free end of the fourth piston 374 so as to be able to move with respect to the frame 30, when the second actuator 37 is operated, along the advancement direction D between a second retracted position, a second intermediate position, and a second advanced position. The free end of the third piston 373 is instead fixed to the frame 30. The second fin 32 and the end fin 34 are kinematically connected to the second rod 38, preferably by the second pin 320 and the end pin 340 respectively, so that when the second rod 38 is in the second advanced position, the second fin 32 and the end fin 34 are in the first rest configuration (Figures 2 and 3), when the second rod 38 is in the second intermediate position, the second fin 32 and the end fin 34 are in the operating configuration (Figure 4), and when the second rod 38 is in the second retracted position, the second fin 32 and the end fin 34 are in the second rest configuration (Figure 5). More specifically, the second pin 320 and the end pin 340 are connected to the second rod 38 respectively by a second arm 323 and an end arm 343, both transverse, respectively fixed to the second pin 320 and the end pin 340 and connected to the second rod 38 so that they can rotate with respect to it around axes parallel to the first axis of rotation R1.

If the sorting means 3 comprise other fins, these are kinematically connected to the actuators 35, 37 (i.e., to the rods 36, 38) alternately to each other, i.e., if a fin is connected to the first actuator 35, then the immediately downstream and immediately upstream fins are connected to the second actuator 37, and vice versa.

As an alternative to the actuators 35, 37 and the rods 36, 38, the sorting means 3 can comprise different actuation means operable to rotate the fins 31, 32, 33, 34 around the respective axes of rotation R1, R2, R3, R4. For example, the sorting means 3 can comprise a plurality of electric motors, each of which associated with a single fin 31, 32, 33, 34 to rotate it around the respective axis of rotation R1, R2, R3, R4 independently of the others.

Figures 6 to 12 illustrate an exemplary operating cycle of the device 1 according to the first embodiment of the invention, adapted to place groups of four boxes S side by side.

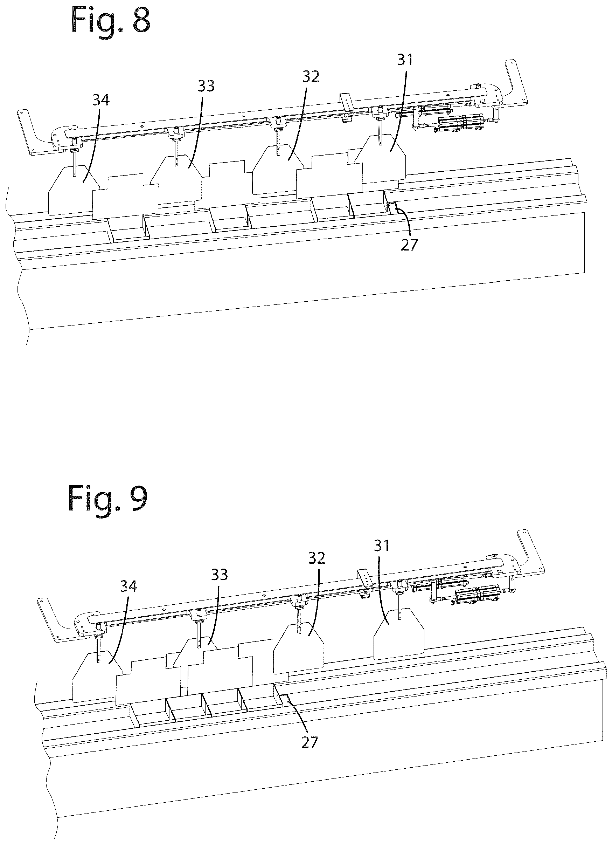

Initially, the boxes S are positioned in the alignment positions 20, 21, 22, 23, and the fins 31, 32, 33, 34 are arranged in the first rest configuration (Figure 6). The fins 31, 32, 33, 34 are then rotated into the operating configuration (Figure 7) by operating the actuators 35, 37. In this way, the side flaps C1, C2 of the boxes S are displaced and offset alternately in the two orientations T1, T2 of the displacement direction T. The movement means 27 are then operated to place the first box S side by side to the second box S (Figure 8). Since the respective side flaps C1, C2 are offset in the two orientations T1, T2 of the displacement direction T, the respective housing portions A can come into contact without causing a collision between the side flaps C1, C2.

By continuing to operate the movement means 27, the boxes S are then all placed side by side (Figure 9) along the advancement direction D.

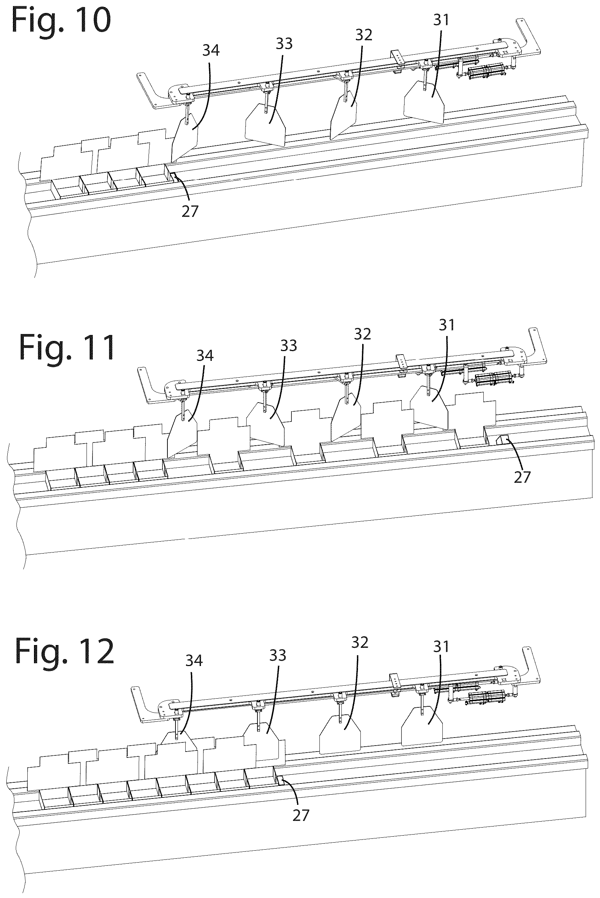

In the case where it is desired to place a second group of boxes S side by side to the first group of already aligned boxes S, the movement means 27 are operated to advance the first group of boxes S along the advancement direction D beyond the end fin 34, and the fins 31, 32, 33, 34 are rotated again into the first rest configuration, so that the front end portion 341 is "in front of" the second side flap C2 of the first box S of the first group of boxes S (Figure 10).

The second group of boxes S is then positioned in the alignment positions 20, 21, 22, 23 (Figure 11).

The fins 31, 32, 33, 34 are then rotated again into the operating configuration and the movement means 27 are operated, placing the boxes S of the second group side by side to each other and to the boxes S of the first group, thus obtaining a single group of eight boxes S placed side by side (Figure 12).

It is clear that these steps can be repeated an arbitrary number of times in order to obtain a group of boxes S placed side by side in an arbitrary number.

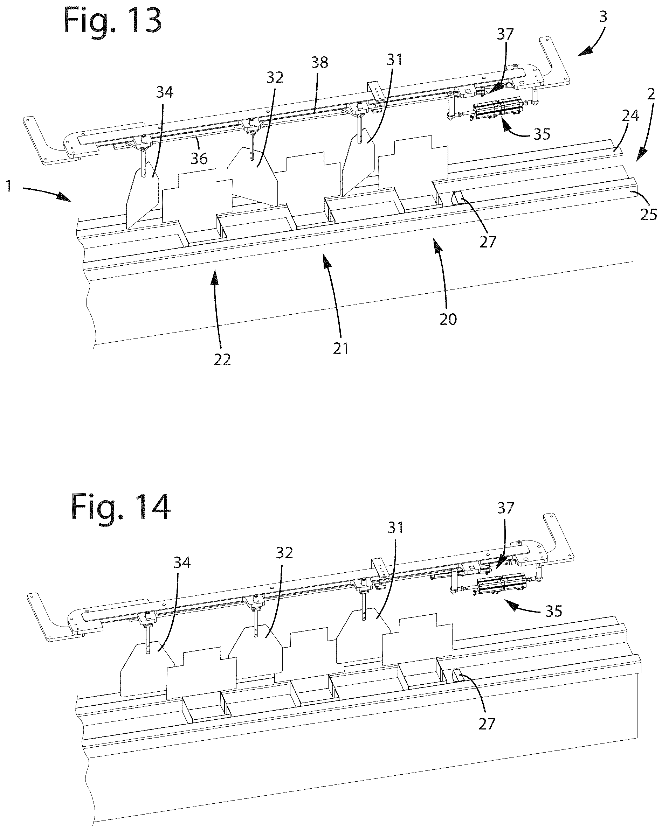

With reference to Figure 13, number 1 globally indicates a side-by-side placing device according to a second embodiment of the invention, adapted to place groups of three boxes S side by side.

The device 1 comprises support means 2 that are substantially identical to those described with reference to the first embodiment of the invention, with the sole difference that such support means 2 define, between the first guide 24 and the second guide 25, a first alignment position 20 and only two further alignment positions 21, 22, and therefore support only three boxes S instead of four.

The device 1 further comprises movement means 27 that are substantially identical to those described with reference to the first embodiment of the invention.

The device 1 further comprises sorting means 3 that are substantially identical to those described with reference to the first embodiment of the invention, with the sole difference that such sorting means 3 comprise only a first fin 31, a second fin 32 and an end fin 34, and that the end fin 34 is connected to the first actuator 35 by the first rod 36, so as to rotate while remaining substantially parallel at all times to the first fin 31.

Figures 13 to 18 illustrate an exemplary operating cycle of the device 1 according to the second embodiment of the invention.

Initially, the boxes S are positioned in the alignment positions 20, 21, 22, and the fins 31, 32, 34 are arranged in the first rest configuration (Figure 13). The fins 31, 32, 34 are then rotated into the operating configuration (Figure 14) by operating the actuators 35, 37. In this way, the side flaps C1, C2 of the boxes S are displaced and offset alternately in the two ways T1, T2 of the displacement direction T.

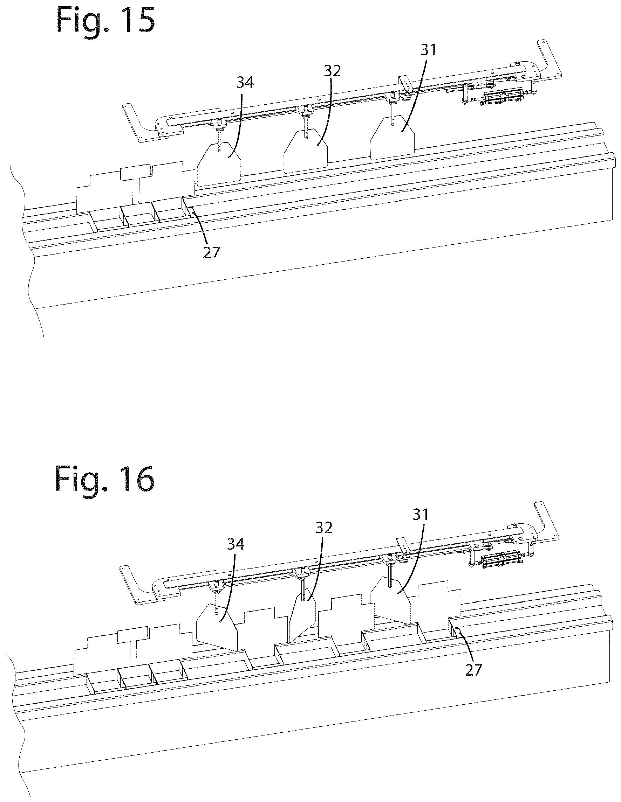

The movement means 27 are then operated to place the boxes S side by side (Figure 15). Since the respective side flaps C1, C2 are offset in the two orientations T1, T2 of the displacement direction T, the respective housing portions A can come into contact without causing a collision between the side flaps C1, C2.

If it is desired to place a second group of boxes S side by side to the first group of boxes S already placed side by side, the movement means 27 are operated to advance the first group of boxes S along the advancement direction D beyond the end fin 34, the second group of boxes S is positioned in the alignment positions 20, 21, 22, and the fins 31, 32, 34 are rotated into the second rest configuration, so that the front end portion 341 is "behind" the second side flap C2 of the first box S of the first group of boxes S, and the rear end portion 342 is "in front of" the first side flap C1 of the third box S of the second group of boxes S (Figure 16).

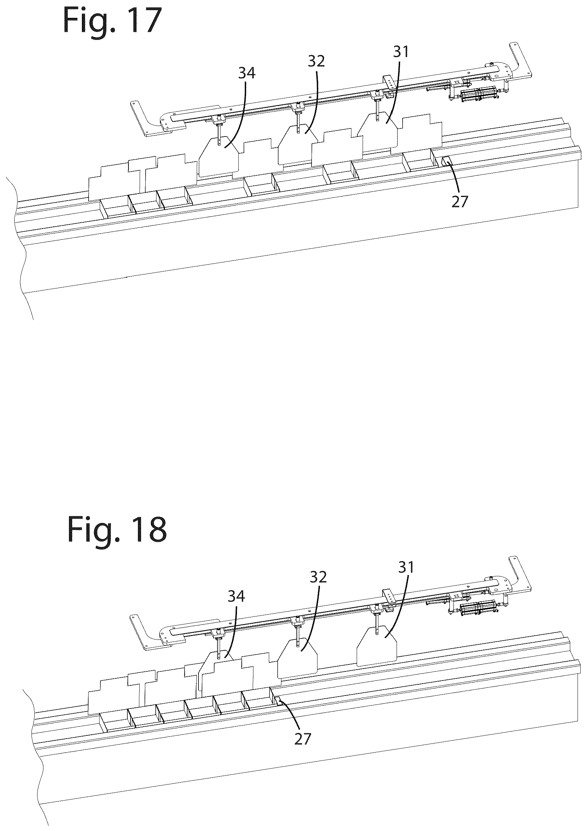

The fins 31, 32, 34 are then rotated again into the operating configuration (Figure 17) by operating the actuators 35, 37. In this way, the side flaps C1, C2 of the boxes S are displaced and offset in the two orientations T1, T2 of the displacement direction T, in the opposite way compared to what was done for the first group of boxes S.

The movement means 27 are then operated, placing the boxes S of the second group side by side to each other and to the boxes S of the first group, obtaining a single group of six boxes S placed side by side (Figure 18). It is clear that also such steps can be repeated an arbitrary number of times to obtain a group of boxes S placed side by side in an arbitrary number.

With reference to both embodiments of the invention, in the case where there is a need to operate a "format change", i.e., to set up the machine to place boxes S of different shape and/or size side by side, it is sufficient to replace the present fins 31, 32, 33, 34 with other fins of appropriate shape and size and/or modify their mutual spacing and/or number, and possibly modify the distance between the first guide 24 and the second guide 25. Such "format change" procedure is therefore particularly simple and quick, since it can be sufficient to act on just one of the listed features: for example, it can be sufficient to replace only the fins 31, 32, 33, 34 or only to modify the distance between the fins 31, 32, 33, 34, particularly in the case where each fin 31, 32, 33, 34 is associated with a corresponding electric motor for the respective rotation.

Furthermore, still with reference to both embodiments of the invention, the device 1 can be part of a packaging machine further comprising forming means operable to form the boxes S, for example from cardboard die-cuts, filling means operable to fill the formed boxes S with products, and closing means operable to close the filled boxes S.

Preferably, the device 1 is arranged in the forming area of the machine, so that the forming means can form the boxes S directly in the alignment positions 20, 21, 22, 23. This allows to obtain a packaging machine with a particularly compact overall footprint.

In particular, the forming means can form the boxes S by moving them perpendicularly to the advancement direction D (for example perpendicularly to the support plane 26, from top to bottom) toward the alignment positions 20, 21, 22, 23.

The present invention has been described, by way of illustration but not limitation, according to preferred embodiments thereof, but it is understood that variations and/or modifications can be made by a person skilled in the art without thereby departing from the related scope of protection as defined in the attached claims.

## Claims

1. Side-by-side placing device (1) configured to place a plurality of boxes (S) side by side, wherein each box (S) comprises a housing portion (A) and a cover portion (C) connected to the housing portion (A) and comprising a first side flap (C1) and a second side flap (C2) which protrude from opposite sides along an advancement direction (D) with respect to the housing portion (A), the device (1) comprising:
- support means (2) defining a first alignment position (20) and at least a first further alignment position (21) downstream of the first alignment position (20), wherein the boxes (S) can be positioned substantially aligned with each other along the advancement direction (D);
- sorting means (3) comprising at least a first fin (31) arranged so that it can be interposed between the first side flap (C1) of the box (S) positioned in the first alignment position (20) and the second side flap (C2) of the box (S) positioned in the first further alignment position (21), the first fin (31) being rotatable on itself around a first axis of rotation (R1) substantially perpendicular to the advancement direction (D); and
- movement means (27) that can be operated to advance the box (S) positioned in the first alignment position (20) along the advancement direction (D) towards the box (S) positioned in the first further alignment position (21).

2. Device (1) according to claim 1, wherein the support means (2) define at least another further alignment position (22, 23) downstream of the first further alignment position (21), and the sorting means (3) comprise at least one further fin (32, 33) arranged so that a further fin (32, 33) can be interposed between the first side flap (C1) and the second side flap (C2) of each pair of boxes (S) positioned at consecutive further alignment positions (21, 22, 23), each further fin (32, 33) being rotatable on itself around a respective axis of rotation (R2, R3) substantially parallel to the first axis of rotation (R1), and wherein the movement means (27) are operable to serially advance each box (S) along the advancement direction (D) towards the boxes (S) positioned downstream.

3. Device (1) according to any one of the preceding claims, wherein the sorting means (3) comprise an end fin (34) arranged downstream of the most downstream alignment position, the end fin (34) being rotatable on itself around an end axis of rotation (R4) substantially parallel to the first axis of rotation (R1).

4. Device (1) according to any one of the preceding claims, wherein each fin (31, 32, 33, 34) is rotatable on itself around a respective axis of rotation (R1, R2, R3, R4) between a first rest configuration, in which the fins (31, 32, 33, 34) form angles with the advancement direction (D) which are substantially equal and open alternately on opposite sides of the advancement direction (D), and an operating configuration, in which the fins (31, 32, 33, 34) are substantially parallel to the advancement direction (D).

5. Device (1) according to claim 4, wherein each fin (31, 32, 33, 34) is rotatable on itself around its respective axis of rotation (R1, R2, R3, R4) also between a second rest configuration, substantially symmetrical to the first rest configuration with respect to the operating configuration, and the operating configuration.

6. Device (1) according to claim 5, wherein the sorting means (3) comprise a first fluid-dynamic actuator (35) and a second fluid-dynamic actuator (37) which are alternately kinematically connected to the fins (31, 32, 33, 34) and operable in such a manner as to rotate the fins (31, 32, 33, 34) between the first rest configuration, the operating configuration and the second rest configuration.

7. Device (1) according to any one of the preceding claims, wherein the support means (2) comprise a first guide (24) and a second guide (25) extending along the advancement direction (D), the alignment positions (20, 21, 22, 23) being defined between the first guide (24) and the second guide (25).

8. Device (1) according to any one of the preceding claims, wherein the movement means (27) comprise at least one pusher element (27) configured to contact the housing portion (A) of the box (S) positioned in the first alignment position (20) and to move along the advancement direction (D).

9. Packaging machine configured to pack products in a plurality of boxes (S), wherein each box (S) comprises a housing portion (A) and a cover portion (C) connected to the housing portion (A) and comprising a first side flap (C1) and a second side flap (C2) which protrude from opposite sides along an advancement direction (D) with respect to the housing portion (A), the machine comprising:
- forming means operable to form the boxes (S);
- filling means operable to fill the formed boxes (S) with the products;
- closing means operable to close the filled boxes (S); **characterised by** additionally comprising a device (1) according to any one of the preceding claims configured to place the formed boxes (S) side by side before they are filled with the products.

10. Machine according to claim 9, in which the forming means are operable to form the boxes (S) by positioning them in the alignment positions (20, 21, 22, 23), preferably by moving them perpendicular to the advancement direction (D).
